Europäisches Patentamt

European Patent Office

Office européen des brevets

(11) Veröffentlichungsnummer: **0 271 648**
**A1**

(12) **EUROPÄISCHE PATENTANMELDUNG**

(21) Anmeldenummer: 87113734.5

(22) Anmeldetag: 19.09.87

(51) Int. Cl.⁴: **E04F 13/08** , F16B 5/02 ,
F16B 43/00 , F16B 37/14

(30) Priorität: 21.11.86 DE 3639748

(43) Veröffentlichungstag der Anmeldung:
22.06.88 Patentblatt 88/25

(84) Benannte Vertragsstaaten:
AT BE CH DE ES FR GB GR IT LI LU NL SE

(71) Anmelder: **Knoche, Alfons**
**Overbergstrasse 7**
**D-5758 Fröndenberg(DE)**

(72) Erfinder: **Knoche, Alfons**
**Overbergstrasse 7**
**D-5758 Fröndenberg(DE)**

(74) Vertreter: **Graf, Walter, Dipl.-Ing.**
**Sckellstrasse 1**
**D-8000 München 80(DE)**

(54) **System zum Befestigen von Fassadenplatten an einer Unterkonstruktion.**

(57) Zum Befestigen von Fassadenplatten (1) an einer Unterkonstruktion (2) wird zum zentrischen Führen der hierzu benutzten Schrauben (3) gegenüber den Plattenborhungen (4) entweder ein elastischer Zentrierring (10) vorgesehen, der in die Bohrung (4) der Fassadenplatte (1) paßt, oder es wird eine Schraube (3) benutzt, deren Gewindeaußendurchmesser etwa dem Innendurchmesser der Plattenbohrungen (4) entspricht und die unterhalb des Schraubenkopfes (7) einen reduzierten Halsabschnitt (6) aufweist; dadurch wird im fertig montierten Zustand eine ungehinderte Radialbewegung zwischen Schrauben (3) und Platten (1) in allen Richtungen gewährleistet.

Fig 1

## System zum Befestigen von Fassadenplatten an einer Unterkonstruktion

Die Erfindung betrifft ein System zum Befestigen von Fassadenplatten an einer Unterkonstruktion laut Oberbegriff des Anspruchs 1.

Fassadenplatten, die mittels Schrauben an einer Unterkonstruktion beispielsweise aus Holzlatten befestigt werden, besitzen meist einen relativ hohen Ausdehnungskoefizienten, vor allem wenn sie als sogenannte Vollkernplatten schichtweise aus Folienmaterial zusammengeklebt sind. Es ist daher Vorschrift, daß die Befestigungsschrauben die Ausdehnung der Fassadenplatten nicht hemmen oder sogar verhindern. Bei einer einseitigen Druckbelastung der Schrauben infolge der thermischen Ausdehnung der Platten bestünde sonst sogar die Gefahr, daß die Schrauben brechen. Es ist daher Vorschrift, daß solche Fassadenplatten nur mit Schrauben befestigt werden, die unterhalb ihres Kopfes einen dünneren gewindefreien Halsabschnitt aufweisen, dessen Außendurchmesser kleiner ist als der Innendurchmesser der Montagebohrung in den Platten, so daß im fertig montierten Zustand dieser dünne gewindefreie Schraubenhals genügend Spiel in der Plattenbohrung hat, um die erwähnte Plattenausdehnung aufnehmen zu können.

Die Vorschrift lautet, daß im fertig montierten Zustand dieses Spiel mindestens 2,7 mm sein muß. Wenn also die Plattenbohrungen beispielsweise 6,7 mm Durchmesser besitzen, so müssen Schrauben benutzt werden, deren gewindefreier Halsabschnitt höchstens 4 mm Durchmesser besitzt. Zur Herstellung einer Holzschraube mit 4 mm Halsdurchmesser muß ein Schraubenrohling verwendet werden, der einen zylindrischen Drahtdurchmesser von ebenfalls 4 mm besitzt. Auf einen solchen Rohling von 4 mm kann jedoch nur ein Gewinde aufgewalzt werden, das einen Außendurchmesser von höchstens 5,3 bis 5,5 mm besitzt.

Die Praxis hat gezeigt, daß selbst bei Einhaltung dieser Vorschrift immer wieder Beschädigungen an den Fassadenplatten bzw. an den Schrauben durch Hemmung bzw. Verhinderung der thermischen Ausdehnung der Platten auftreten.

Es ist daher Aufgabe der Erfindung, ein System zum Befestigen von Fassadenplatten an einer Unterkonstruktion aufzuzeigen, das mit Sicherheit die ungehinderte Ausdehnung der Fassadenplatten gegenüber den Schrauben gewährleistet.

Diese Aufgabe wird gemäß der Erfindung dadurch gelöst, daß Maßnahmen vorgesehen werden, die gewährleisten, daß die Schrauben immer exakt zentrisch in die Plattenbohrungen eingesetzt werden und zwar wird dies gemäß einer ersten Lösung ausgehend von einem System laut Oberbegriff des Patentanspruchs 1 durch dessen kennzeichnende Merkmale gelöst und gemäß einer zweiten erfindungsgemäßen Lösung ausgehend von einer Vorrichtung laut Oberbegriff des Patentanspruchs 10 durch dessen kennzeichnende Merkmale gelöst. Vorteilhafte Weiterbildungen dieser beiden Lösungen der erfindungsgemäßen Aufgabe zum jeweils exakt zentrierten Einsetzen der Schrauben ergeben sich aus den Unteransprüchen 2 bis 9 bzw. 11 bis 15.

Mit dem erfindungsgemäßen Zentrierring ist gewährleistet, daß die Schrauben immer exakt zentrisch in die Plattenbohrung eingeschraubt werden, ohne daß hierzu der Monteur entsprechende Ausrichtmaßnahmen vornehmen muß. Im fertig montierten Zustand, in welchem die Schraube mit der Unterseite ihres Flachkopfes bzw. über die zwischengelegte Unterlegscheibe mit Flächendruck auf der Oberseite der Platte aufliegt, kann die Platte sich wegen der hochelastischen Ausgestaltung des Zentrierringes trotzdem nach allen Seiten in radialer Richtung verschieben und ausdehnen, ohne daß die Schraube am Rand der Plattenbohrung anstößt. Damit wird vermieden, daß durch thermische Ausdehnung der Fassadenplatten iber den Reibungsdruck Seitenkräfte auf den Schraubenschaft übertragen werden. Auf diese Weise werden mit Sicherheit Abscherungen der Schrauben verhindert. Der Zentrierring ist so geformt, daß der zwischen der Schraube und der Plattenbohrungswand vorgesehene Freiraum nicht unnötig eingeschränkt wird, d.h. der Zentrierring selbst soll in diesem Bereich möglichst dünn und materialarm sein, damit er im fertig montierten Zustand die gewünschte radiale Bewegungsfreiheit zwischen Schrauben und Fassadenplatte nicht unnötig einschränkt. Der Zentrierring steht nur über einen schmalen Führungssteg mit dem Gewinde der Schraube in Verbindung, damit er die gewünschte Zentrierwirkung beim Einsetzen der Schraube in das Plattenloch ausüben kann, auch dieser Teil des Zentrierringes ist so geformt und dimensioniert, daß hierdurch die gewünschten Radialbewegungen nicht behindert sind. Die Form dieses Führungsabschnittes des Zentrierringes kann zusammen mit dem gewählten Kunststoffmaterial so sein, daß im fertig montierten Zustand durch wiederholte Materialverformung des Zentrierringes infolge thermischer Ausdehnung der Platte der Zentrierring sich allmählich auflöst, was gegebenenfalls durch zusätzliche Sollbruchstellen am Zentrierring sogar noch bewußt erleichtert werden kann. Der Gewindeführungsabschnitt des Zentrierringes ist so geformt, daß der Zentrierring mit engem Sitz auf dem unteren Ende der Schraube aufgeschraubt werden kann, so daß hierdurch nicht nur die exakte zentrische Führung gewährleistet ist, sondern gleichzeitig auch noch der Zentrierring vor der Montage auf die Schraube aufgesetzt werden kann und dort unverlierbar gehalten wird. Damit kann der elastische Zentrierring schon vorher auf die Schraube aufgesetzt und so dem Monteur als vormontierter Befestigungssatz angeboten werden, so daß an der Baustelle nur noch die Schraube mit dem an ihrer Spitze aufgesetzten Zentrierring in die Bohrung der Platte eingesetzt werden muß.

Gemäß einer Weiterbildung der Erfindung hat es sich ferner als vorteilhaft erwiesen, diesen Zentrierring gleichzeitig auch noch als Befestigungsteil für eine Unterlegscheibe auszunutzen, so daß auch die Unterlegscheibe unverlierbar in einer Vormontagestellung an der Schraube gehalten ist.

Gemäß der zweiten erfindungsgemäßen Lösung wird das exakte zentrische Einschrauben der Schrauben allein durch deren Dimensionierung des Gewindeaußendurchmessers erreicht, d.h. für eine Plattenbohrung von beispielsweise 6,7 mm wird eine Schraube verwendet, deren Gewindeaußendurchmesser beispielsweise 6,5 mm ist. Da eine solche Schraube mit einem Gewindeaußendurchmesser von 6,5 mm nur aus einem Schraubenrohling von 5 mm Drahtdurchmesser hergestellt werden kann, bei welcher damit dann auch der unterhalb des Schraubenkopfes verbleibende gewindefreie Halsabschnitt 5 mm betragen würde, eine solche Schraube also nicht der Forderung nach einem Spiel von 2,7 mm entsprechen würde, wird gemäß der Erfindung durch einen zusätzlichen Arbeitsvorgang der Außendurchmesser dieses gewindefreien Halsabschnittes auf beispielsweise 4 mm reduziert. Eine solche Spezialschraube erfüllt also einerseits wieder die Forderung nach dem Spiel von 2,7 mm und kann andererseits aber immer exakt mittig in das Loch der Fassadenplatte eingesetzt werden, da die Schraube beim Einsetzen mit ihrem Gewinde-Außenumfang innerhalb der Bohrung zentrisch geführt ist. Auch bei dieser zweiten erfindungsgemäßen Lösung der Aufgabe wird also mit Sicherheit erreicht, daß das geforderte Spiel von 2,7 mm auch tatsächlich in der Praxis nach allen radialen Richtungen wirksam ist und auch bei extremen thermischen Ausdehnungen der Fassadenplatten keine Scherkräfte auf die Schraube erzeugt werden können.

Im fertig montierten Zustand wird bei beiden erfindungsgemäßen Lösungen durch den Anpreßdruck der Schraube der Rand der Unterlegscheibe mehr oder weniger stark in die Oberfläche der Fassadenplatte eingedrückt, wodurch nicht nur die Oberfläche der Fassadenplatte beschädigt und unansehnlich wird, sondern wodurch vor allem auch verhindert wird, daß die Fassadenplatte sich im Sinne der obigen Aufgabenstellung ungehindert ausdehnen kann.

Gemäß einer weiteren erfindungsgemäßen Lösung der Aufgabe eines ungehinderten Ausdehnens der Platten wird daher eine Schraube nach Anspruch 16 und 17 vorgeschlagen, die gewährleistet, daß der auf der Fassadenplatte aufliegende äußere Rand der Unterlegscheibe sich nicht in die Oberfläche der Fassadenplatte einschneidet und die Platte sich daher ungehindert gegenüber der Schraube ausdehnen kann. Diese erfindungsgemäße Schraube ist dabei insbesondere von Vorteil im Zusammenhang mit einem Befestigungssystem nach einem der vorhergehenden Ansprüche, sie kann jedoch auch unabhängig davon zur Befestigung von Fassadenplatten ohne Zentrierung eingesetzt werden, da durch den abgerundeten Rand der Unterlegscheibe allein schon eine verbesserte Ausdehnungsmöglichkeit für die Fassadenplatte geschaffen wird.

Die Erfindung wird im folgenden anhand schematischer Zeichnungen an Ausführungsbeispielen näher erläutert.

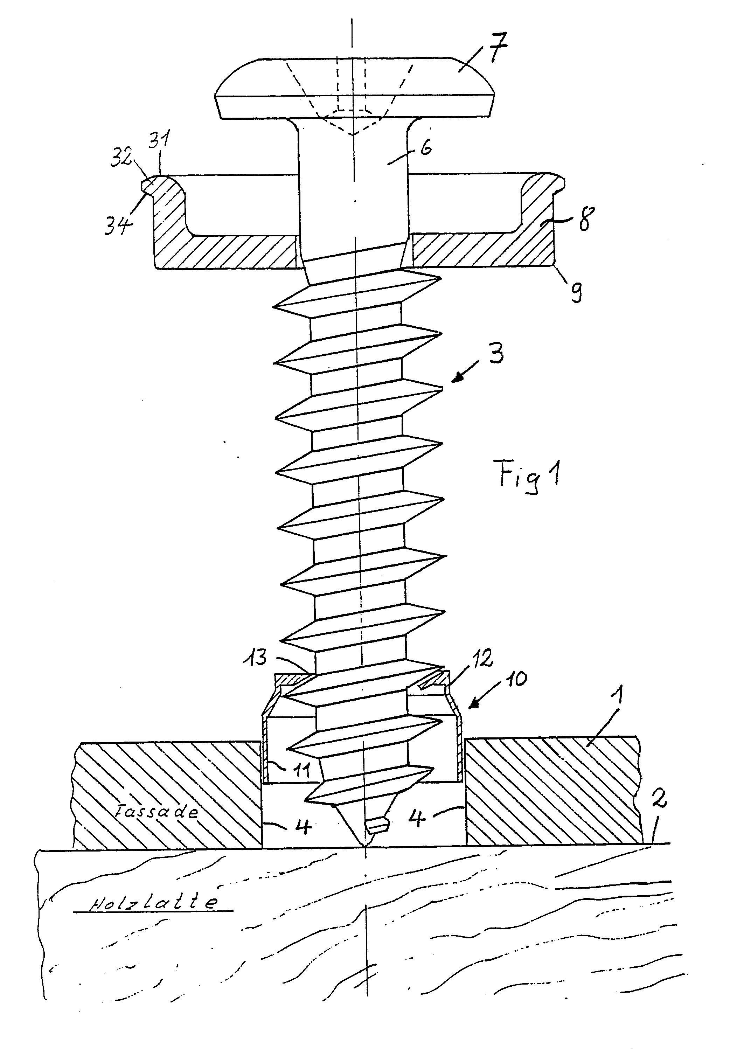

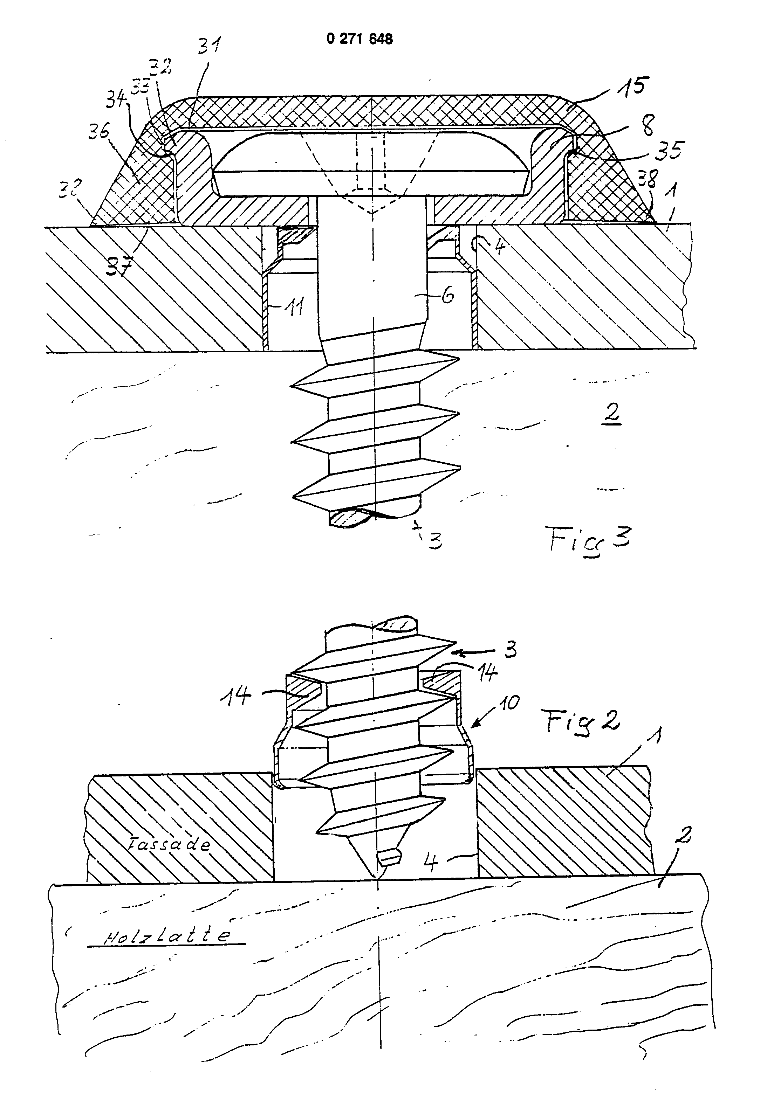

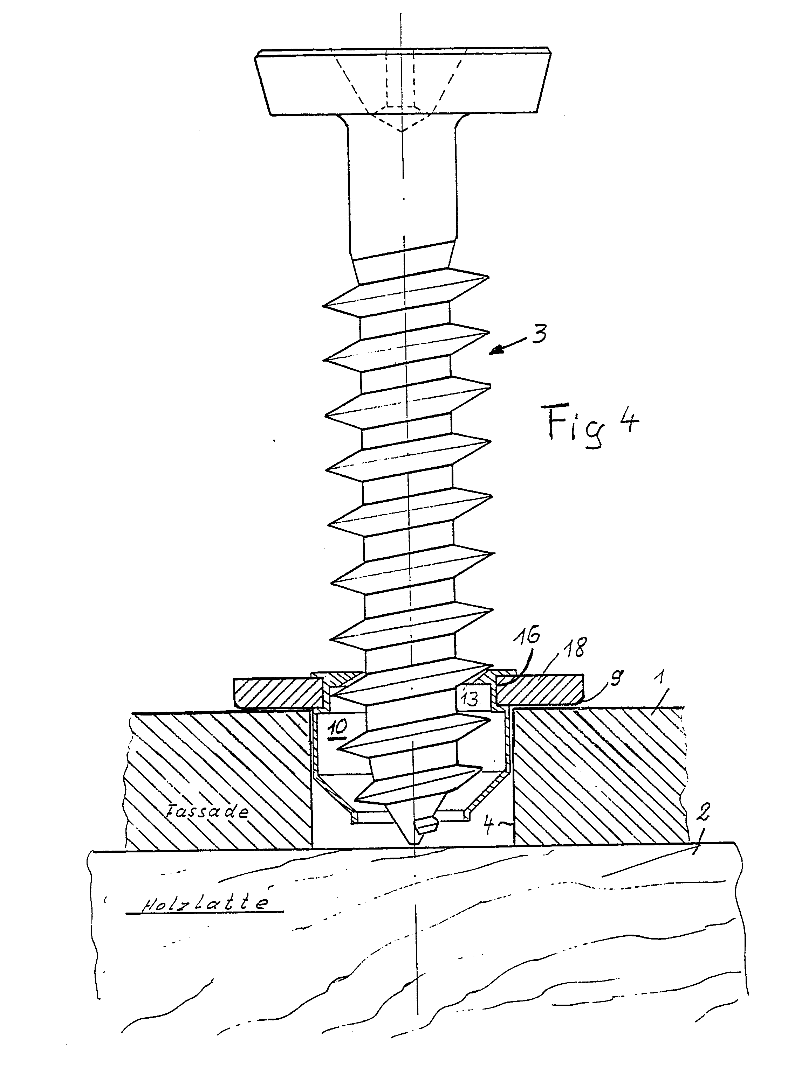

Fig. 1 zeigt die Befestigung einer Fassadenplatte 1 an einer Lattenunterkonstruktion 2 mittels einer Schraube 3, die eine Holzschraube mit Nagelspitze, ein Schraubnagel oder eine andere bekannte selbstbohrende Schraube sein kann. In der Fassadenplatte 1 ist eine Bohrung 4 vorgebohrt, die im Durchmesser größer ist als der Außendurchmesser des im fertig montierten Zustand in dieser Bohrung 4 liegenden Schraubenhalses 6, so daß die Fassadenplatte 1 sich gegenüber der Unterkonstruktion 2 und der Schraube 3 ungehindert ausdehnen kann. Auf dem Schraubenhals 6 ist unterhalb des Schraubenkopfes 7 unverlierbar eine Unterlegscheibe 8 befestigt, deren Durchmesser größer als der Durchmesser der Bohrung 4 gewählt ist. Der äußere Rand 9 dieser Unterlegscheibe 8 ist abgerundet, damit im fertig montierten Zustand, in welchem die Unterlegscheibe fest auf die Oberfläche der Platte 1 aufgedrückt ist, die Oberfläche durch diesen Rand bei der Ausdehnung nicht beschädigt wird.

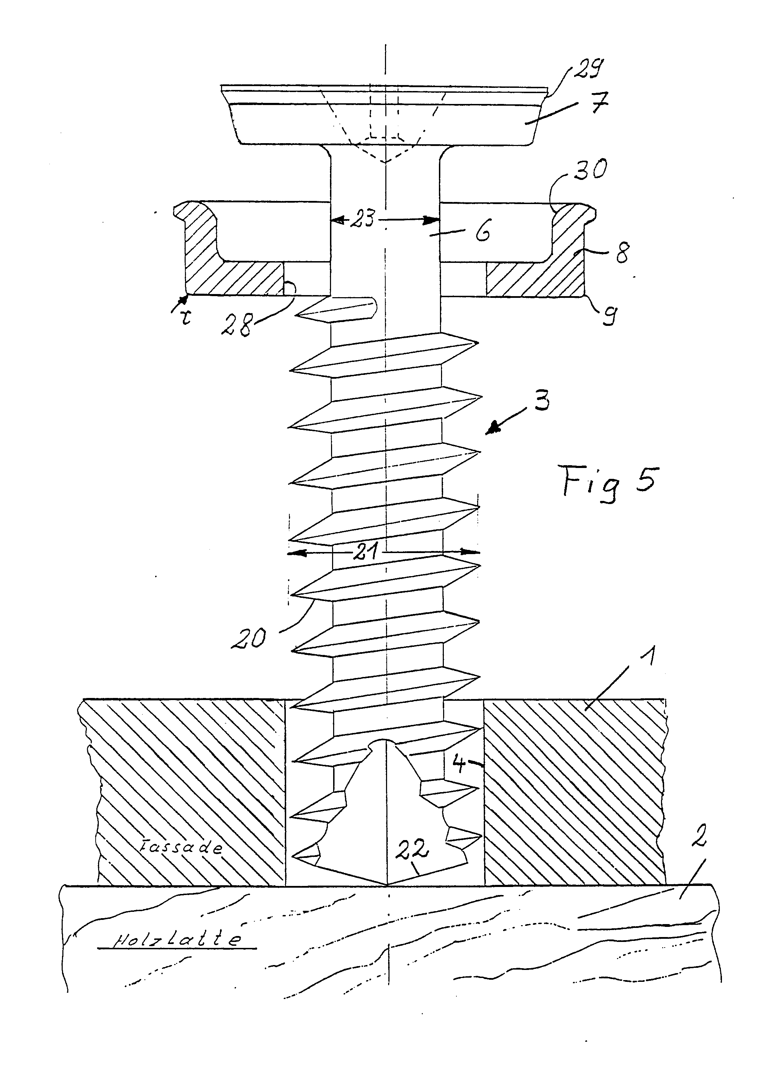

Auf das untere Ende der Schraube 3 ist ein Zentrierring 10 aufgesetzt, der becherartige Form besitzt und aus einem elastischen Kunststoffmaterial besteht. Der dünnwandige Becherteil 11 des Zentrieringes paßt mit freiem Spiel in die Bohrung 4 der Platte 1, der Außendurchmesser des Becherteiles 11 ist so gewählt, daß nur geringer Spielraum zwischen Becherteil 11 und Bohrungswand besteht. Der Becherteil 11 geht in einen oberen Führungsabschnitt 12 über, der radial nach innen etwas eingezogen ist und in einem Gewindeabschnitt 13 endet, der in etwa der Form des Gewindes der Schraube 3 entspricht. Über diesen Abschnitt 13 ist der Zentrierring 10 mit vorzugsweise engem Sitz auf dem Gewinde der Schraube 3 gehalten. Im einfachsten Fall ist der Abschnitt 13 nur ein vom Becherrand radial nach innen vorspringender Ringkragen, in welchen die Schraube durch teilweise Verformung des elastischen Ringmaterials sich selbsttätig einschneidet, vorzugsweise ist jedoch dieser Abschnitt 13 schon so im Spritzgußverfahren ausgestaltet, daß er der Gewindeform der Schraube 3 angepaßt ist, so daß der Zentrierring 10 nicht nur wie eine Mutter leicht auf die Schraube aufgeschraubt werden kann, sondern auch gewährleistet ist, daß der Zentrierring auch tatsächlich konzentrisch zur Schraubenachse aufgesetzt und gehalten werden kann. In dem gezeigten Ausführungsbeispiel nach Fig. 1 ist ein einziger Gewindegang mit der Steigung und Form des Schraubengewindes am oberen Führungsabschnitt 12 ausgebildet, im Ausführungsbeispiel nach Fig. 2 wird das Gewinde durch mehrere am Innenumfang des Führungsabschnitts 12 ausgebildete und radial nach innen vorspringende Noppen 14 gebildet die,in ihrer Form und Anordnung dem Schraubengewinde entsprechen.

Bei der Montage wird entweder der Kunststoff-Zentrierring 10 vorher in die Bohrung 4 eingesetzt und dann die Schraube 3 in den Zentrierring 10 eingeschraubt, bis die Schraubenspitze in der Unterkonstruktion 2 faßt. Eine andere Möglichkeit besteht darin, den Zentrierring 10 schon vorher auf die Schraube 3 aufzusetzen, etwa in der in Fig. 1 dargestellten Vormontagestellung. Der Monteur braucht dann nur noch die Schraube mit an der Spitze aufgesetztem Zentrierring 10 in die Bohrung einzustecken und die Schraube in die Unterkonstruktion einzuschrauben. Durch den Zentrierring 10 ist die Schraube 3 beim Ansetzen und auch während des Einschraubens stets exakt zentrisch in der Bohrung 4 geführt, bis die in Fig.3 dargestellte Endstellung erreicht ist, in welcher die Unterlegschreibe 8 auf der Oberseite der Platte 1 mit Druck aufliegt. Die axiale Höhe des Zentrierringes 10 ist vorzugsweise geringer gewählt als die Dicke der Platte 1, so daß der Zentrierring 10 in der Endmontagestellung lose in der Bohrung 4 gehalten ist und allseitig in radialer Richtung ein großer Abstand zwischen der Innenseite des Becherteiles 11 und dem Schraubenschaft 6 besteht, der ein ungehindertes radiales Verschieben zwischen Fassadenplatte und Schraube ermöglicht. Ein solches radiales Verschieben wird auch nicht durch den Führungsabschnitt 12 behindert, da erstens das Material des Zentrierringes elastisch nachgiebig ist und dieser Führungsabschnitt 12 nur eine geringe axiale Höhe besitzt. Besonders vorteilhaft ist hierfür auch die erwähnte Ausbildung des Gewindeabschnitts 13 durch verteilte vorspringende Noppen, durch welche die radiale Bewegung noch ungehinderter ist. Die erwähnte Abrundung 9 auf der Unterseite der Unterlegscheibe 8 verhindert, daß bei der thermischen Ausdehnung der Platten deren Oberfläche beschädigt wird. Die Unterlegscheibe 8 ist in dem gezeigten Ausführungsbeispiel in an sich bekannter Weise als topfförmiges Pressteil ausgebildet, auf dessen Rand nach der Montage gegebenenfalls noch eine Abdeckkappe 15 aus Kunststoff aufgesetzt werden kann.

Fig. 4 zeigt eine andere Form des Zentrierringes 10, hier ist auch die Unterseite trichterförmig radial nach innen eingezogen, um das Einführen in die Bohrung 4 zu erleichtern. Der Führungsabschnitt 12, mit dem der Zentrierring 10 auf der Schraube 3 zentrisch gehalten ist und der auf der Innenseite das Führungsgewinde 13 aufweist, ist in Fig. 4 zusätzlich noch mit einer Ringnut 16 versehen, in welche mit Schnappwirkung eine Unterlegschreibe 18, die gegebenenfalls auch wieder als Becherteil 8 nach Fig. 1 ausgebildet sein kann, einsetzbar ist. Die Unterlegscheibe 18 wird also zunächst auf den Führungsabschnitt 12 in die Nut 16 eingesetzt und wird dort durch das elastische Material des Zentrierringes unverlierbar gehalten. Wird nun die Einheit aus Zentrierring 10 und aufgesetzter Unterlegscheibe 18 auf die Schraube aufgesetzt, so wird damit gleichzeitig auch die Unterlegscheibe zusammen mit dem Zentrierring in einer Vormontagestellung gehalten. Auf diese Weise ist auch eine einfache verlierungssichere Vormontage der Unterlegscheibe auf der Schraube möglich, was bisher nur durch das gleichzeitige Aufsetzen der Unterlegscheibe und Aufwalzen des Gewindes möglich ist.

Die Form des Zentrierringes 10 kann beliebig sein, er kann gegebenenfalls auch mit zusätzlichen Aussparungen versehen, d.h. käfigartig ausgebildet sein, wesentlich ist nur, daß er den Raum zwischen Schraube 3 und Bohrung 4 im fertig montierten Zustand möglichst wenig verkleinert, damit dieser Raum voll für radiale Bewegungen zur Verfügung bleibt, andererseits muß der Zentrierring nur so geformt und dimensioniert sein, daß er auch die gewünschte Zentrierwirkung bei der Montage gewährleistet.

Fig. 5 zeigt eine weitere Möglichkeit zum zentrischen Einsetzen einer Schraube 3 in die Bohrung 4 einer Fassadenplatte 1. Diese Schraube 3 besitzt ein Gewinde 20 beispielsweise wiederum von selbstbohrender Art, dessen Außendurchmesser 21 genau so groß oder allenfalls einige Zehntel-Millimeter kleiner gewählt ist als der Innendurchmesser der Bohrung 4 in der Platte 1. Wenn die Bohrung 4 beispielsweise einen Innendurchmesser von 6,7 mm besitzt, wird eine Schraube 3 benutzt, die einen Gewindeaußendurchmesser 21 von 6,5 mm besitzt. Damit ist die Schraube 3 beim Einsetzen in die Bohrung 4 immer exakt zentrisch zu dieser Bohrung 4 geführt und sie schneidet immer exakt mittig mit ihrer Bohrspitze 22 in die darunterliegende Holzplatte 2 ein. Die Bohrspitze ist vorzugsweise relativ stumpf ausgebildet, damit die unteren Gewindegänge der Schraube möglichst schon von Anfang an unmittelbar nach der Spitze ihren vollen Außendurchmesser 21 aufweisen und so schon von Anfang an beim Einsetzen der Schraube in die Bohrung 3 ihre Führungsfunktion ausüben können.

Damit im fertig montierten Zustand das geforderte Spiel von beispielsweise 2,7 mm zwischen Schraubenhals 6 und Bohrung 4 gewährleistet ist, ist der Außendurchmesser des Schraubenhalses 6 durch einen zusätzlichen Bearbeitungsvorgang auf einen Außendurchmesser 23 von beispielsweise 4 mm reduziert.

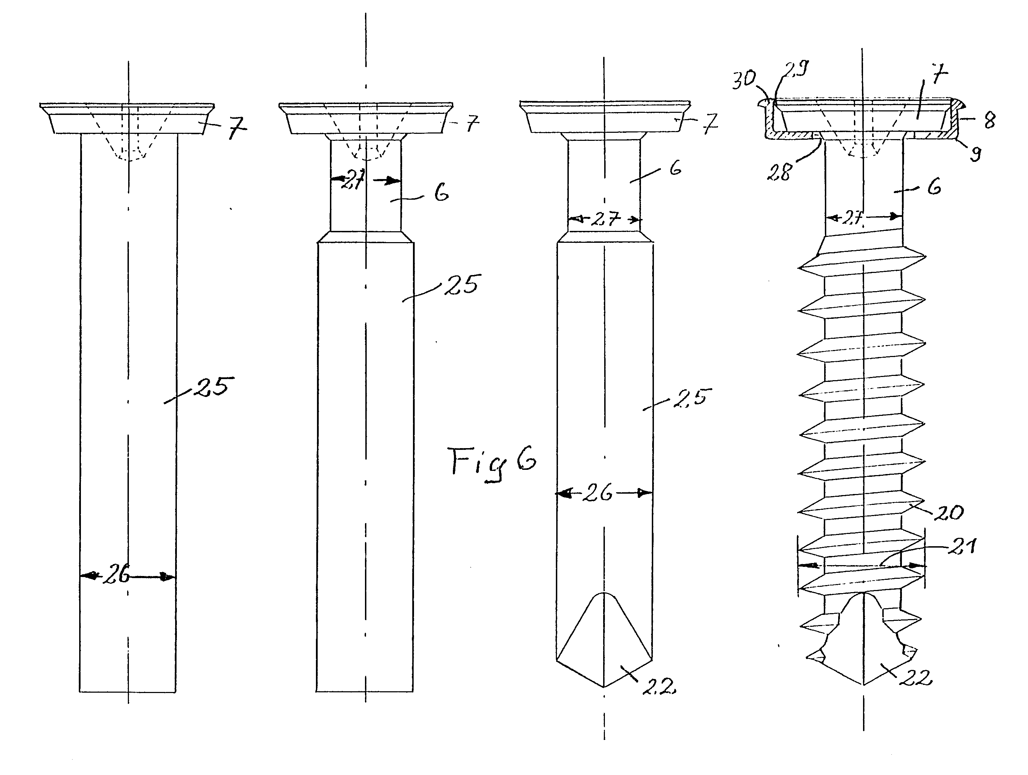

Fig. 6 zeigt die Herstellung einer solchen Spezialschraube nach Fig. 5. Ausgangspunkt ist ein Schraubenrohling 25 mit einem Drahtdurchmesser 26 (zylindrischer Außendurchmesser des Schaftrohteiles) von beispielsweise 5 mm. Durch einen nachfolgenden zusätzlichen Arbeitsvorgang, beispielsweise durch Drehen auf einer Drehmaschine oder durch spanloses radiales Hämmern oder gegebenenfalls auch durch einen zusätzlichen Walzvorgang wird dann der Halsabschnitt 6 unterhalb des Schraubenkopfes 7 auf einer axialen Länge von mindestens der Dicke der Fassadenplatte 1 auf einen Durchmesser 27 von beispielsweise 4 mm reduziert, also auf einen Durchmesser, der in Bezug auf den Innendurchmesser der Bohrung 4 der Fassadenplatte dem geforderten späteren Spiel von beispielsweise 2,7 mm entspricht. Anschließend wird dann die Bohrspitze 22 hergestellt und schließlich wird auf diesen Schraubenrohling dann durch einen bekannten Gewindewalzvorgang das Gewinde 20 aufgewalzt, das ausgehend von einem Pressmaß von 5 mm einen Außendurchmesser 21 von 6,5 mm ergibt, bei einem Kerndurchmesser von etwa 3,6 bis 4 mm. Die Bohrspitze 22 wird vorzugsweise in an sich bekannter Weise so ausgebildet, daß trotz des größeren Außendurchmessers der Schraube diese leicht nach Art einer selbstschneidenden Schraube in die Unterkonstruktion eingeschraubt werden kann.

Die Durchmesserreduzierung des Schraubenhalses 6 auf einen Durchmesser, der kleiner ist als der sich beim Gewindewalzen an sich ergebende gewindefreie Halsabschnitt einer üblichen Schraube, muß nicht unbedingt im Sinne der Fig. 6 vor dem Aufwalzen des Gewindes 20 erfolgen, diese Durchmesserreduzierung des Halsabschnittes könnte gegebenenfalls auch gleichzeitig während des Aufwalzens des Gewindes 20 in ein und derselben Maschine durch spanlose Verformung durchgeführt werden, eine andere Möglichkeit bestünde auch noch darin, diese Durchmesserreduzierung nach dem Aufwalzen des Gewindes durch einen zusätzlichen Arbeitsvorgang vorzunehmen, beispielsweise durch Abdrehen des Halsabschnittes an der fertigen mit Gewinde versehenen Schraube oder wiederum durch einen spanlosen Arbeitsvorgang.

Auch für das Ausführungsbeispiel nach Fig. 5 ist es vorteilhaft, zusätzlich eine Unterlegscheibe 8 zu benutzen, deren Außendurchmesser größer gewählt ist als die Bohrung 4. Es ist ferner vorteilhaft, diese Unterlegscheibe 8 wieder unverlierbar an der Schraube 3 zu befestigen. Nachdem hierzu die Unterlegscheibe vor dem Aufwalzen des Gewindes auf dem Hals 6 der Schraube aufgeschoben sein muß, muß der Innendurchmesser 28 des Loches der Unterlegscheibe 8 mindestens so groß wie der Durchmesser 26 des Schraubenrohlings sein, damit die Unterlegscheibe 8 vor dem Aufwalzen des Gewindes 20 auf den Schraubenschaft aufgeschoben werden kann. In dem erwähnten Beispiel muß der Durchmesser des Loches 28 also mindestens 5 mm sein. Damit ist aber die Unterlegscheibe 8 nicht mehr auf dem Schraubenhals mittig geführt, da dieser ja infolge seiner Reduzierung nur noch 4 mm Durchmesser besitzt.

Gemäß einer Weiterbildung der Erfindung ist daher durch entsprechende Ausgestaltung des Schraubenkopfes 7 und der Form dieser Unterlegscheibe 8 dafür gesorgt, daß durch das funktionelle Zusammenwirken dieser Teile die Unterlegscheibe 8 immer exakt mittig zum Schraubenkopf 7 und damit auch zum Schraubenschaft geführt ist. Hierzu könnte gegebenenfalls nur auf der Unterseite des Schraubenkopfes eine schmale Ringschulter vorgesehen sein, deren axiale Länge allenfalls so groß wie die Dicke der Unterlegscheibe 8 ist und welche das Loch 28 der Unterlegscheibe ausfüllt und diese dadurch zentriert. Als besonders vorteilhaft hat es sich jedoch im Sinne des dargestellten Ausführungsbeispiels erwiesen, die Unterlegscheibe als topfförmiges Metallpreßteil auszubilden und den oberen Rand 29 des Schraubenkopfes 7 so auszugestalten, daß er mit dem nach oben abstehenden Rand 30 der Unterlegscheibe 8 im zentrierenden Sinne zusammenwirkt. Dadurch ist gewährleistet, daß die Unterlegscheibe 8 immer zentrisch zur Schraube geführt ist und mit Sicherheit die Bohrung 4 der Platte 1 vorschriftsmäßig abdeckt. Auch hier ist wieder der äußere Rand 9 der Unterlegscheibe 8 abgerundet, damit die Oberfläche der Fassadenplatte 1 bei deren Ausdehnung nicht beschädigt wird und die Ausdehnung ungehindert möglich ist.

Der obere Rand der topfförmigen Unterlegscheibe 8 ist radial nach außen zu einem abstehenden Randwulst 32 geformt, dessen Oberseite 31 abgerundet und ohne scharfe Kanten ist. Damit wird vermieden, daß beim Aufsetzen der Abdeckkappe 15 Kunststoff von der Abdeckkappe abgeschabt wird und die Ringnut 33 auf der Innenseite der Abdeckkappe 15, welche im aufgesetzten Zustand den Randwulst 32 aufnimmt, beschädigt wird. Durch die runde Oberseite 31 ist also gewährleistet, daß die Kappe 15 mit guter haltbarer Schnappwirkung auf die Unterlegscheibe 8 aufgesetzt und dort gehalten wird. Die Unterseite 34 des Randwulstes 32 geht schräg oder mit einer gewissen Rundung in die zylindrische Außenwand der topfförmigen Unterlegscheibe 8 über. Durch diese Schrägfläche 34 wird auf die untere Ringfläche 35 der Ringnut 33 im aufgesetzten Zustand eine mehr oder weniger starke Druckkraft in axialer Richtung nach unten aufgebracht, die Abdeckkappe 15 erhält durch das Zusammenwirken dieser Schrägfläche 34 mit der Kante 35 der Ringnut 33 also eine gewisse Vorspannung axial nach unten in Richtung auf die Oberfläche der Fassadenplatte 1. Das Profil 36 der Abdeckkappe 15 ist im Sinne der Fig. 3 ansonsten weitgehendst dem Außenprofil der topfförmigen Unterlegscheibe 8 angepaßt. Die Unterseite 37 der Abdeckkappe 15 ist im Sinne der Fig. 3 etwas hinterschnitten, so daß eine elastische Lippe 38 am äußeren Rand entsteht, die durch die erwähnte axiale Druckkraft dicht auf der Oberseite der Fassadenplatte 1 aufliegt. Hierdurch wird die Schraube 3 und die Unterlegscheibe 8 sowie die gesamte Befestigungsstelle vor Schmutz und Wasser geschützt. Um diese Abdichtwirkung noch zu verstärken ist neben der erwähnten speziellen Profilform 36 der Abdeckkappe 15 noch die axiale Abmessung zwischen der Lippe 38 und der unteren Kante 35 der Ringnut 33 etwas größer gewählt als der entsprechende Abstand zwischen der schrägen Unterseite 34 des Randwulstes 32 und der Unterseite der Unterlegscheibe 8.

**Ansprüche**

1. System zum Befestigen von Fassadenplatten (1) an einer Unterkonstruktion (2) mittels Schrauben (3), deren gewindefreier Halsabschnitt (6) einen kleineren Durchmesser als die im fertig montierten Zustand diesen Halsabschnitt mit Spiel aufnehmende Plattenbohrung (4) aufweist, **gekennzeichnet** durch einen in die Plattenbohrung (4) passenden und die Schraube (3) zentrisch aufnehmenden Zentrierring (10) aus elastisch nachgiebigem Material, durch den die Schraube (3) beim Einschrauben gegenüber der Plattenbohrung (4) zentrisch geführt ist und der so ausgebildet ist, daß er im fertig montierten Zustand nach allen Richtungen eine Radialverschiebung zwischen Schraube (3) und Platte (1) zuläßt.

2. System nach Anspruch 1, dadurch **gekennzeichnet**, daß der Zentrierring (10) einen dünnwandigen Becherabschnitt (11) umfaßt, der mit seinem Außenmantel mit geringem radialen Spiel in die Plattenbohrung (4) paßt und über einen oberen an den Becherabschnitt anschließenden Führungsabschnitt (12,13) auf das Gewinde der Schraube (3) aufschraubbar ist.

3. System nach Anspruch 1 oder 2, dadurch **gekennzeichnet**, daß der Führungsabschnitt (12) des Zentrierringes (10) so ausgebildet ist, daß er mit engem Sitz auf das untere Ende der Schraube (3) paßt und längs dieser verschraubbar ist.

4. System nach Anspruch 3, dadurch **gekennzeichnet**, daß der Führungsabschnitt (12) einen auf das Gewinde der Schraube (3) passenden Innengewindeabschnitt (13) aufweist.

5. System nach Anspruch 4, dadurch **gekennzeichnet**, daß das Innengewinde (13) durch am Führungsabschnitt (12) nach innen vorspringende Noppen (14) gebildet ist.

6. System nach einem der vorhergehenden Ansprüche, dadurch **gekennzeichnet**, daß der Zentrierring (10) als Spritzgußteil aus elastischem Kunststoffmaterial ausgebildet ist.

7. System nach einem der vorhergehenden Ansprüche, dadurch **gekennzeichnet**, daß die axiale Höhe des Zentrierringes (10) gleich oder kleiner als die Dicke der Fassadenplatte (1) gewählt ist.

8. System nach einem der vorhergehenden Ansprüche, dadurch **gekennzeichnet**, daß der Schraube (3) eine Unterlegscheibe (8,18) von größerem Durchmesser als die Plattenbohrung zugeordnet ist, die an dem Zentrierring (10) lösbar befestigt ist.

9. System nach Anspruch 2 und 8, dadurch **gekennzeichnet**, daß der Außenumfang (16) des Zentrierringes (10) als mit Schnappwirkung in das Loch der Unterlegscheibe (8,18) passend ausgebildet ist.

10. System zum Befestigen von Fassadenplatten (1) an einer Unterkonstruktion (2) mitttels Schrauben (3), deren gewindefreier Halsabschnitt (6) einen kleineren Durchmesser als die im fertig montierten Zustand diesen Halsabschnitt (6) mit Spiel aufnehmende Plattenbohrung (4) aufweist, dadurch **gekennzeichnet**, daß der Außendurchmesser (21) des Gewindeabschnittes (20) der Schraube (3) gleich oder nur geringfügig kleiner als der Innendurchmesser der Plattenbohrung (4) gewählt ist und der gewindefreie Halsabschnitt (6) unterhalb des Schraubenkopfes (7) einen Durchmesser (27) besitzt, der kleiner ist als der Durchmesser des sich beim Gewindewalzen ergebenden Halsabschnittes.

11. System nach Anspruch 10, dadurch **gekennzeichnet,** daß die Spitze der Schraube (3) als das Eindrehen erleichternde Bohrspitze (22) ausgebildet ist.

12. System nach Anspruch 10 oder 11, dadurch **gekennzeichnet** , daß unterhalb des Schraubenkopfes (7) auf dem Schraubenhals (6) unverlierbar eine Unterlegscheibe (8) angebracht ist, deren Außendurch messer größer als der Durchmesser der Plattenbohrung (4) ist, und die Unterlegscheibe (8) durch den Schraubenkopf (7) zentrisch zu dem im Durchmesser reduzierten Halsabschnitt (6) der Schraube (3) geführt ist.

13. System nach Anspruch 12, dadurch **gekennzeichnet,** daß die Unterlegscheibe (8) ein topfförmiges Pressteil ist und durch das Zusammenwirken ihres nach oben abstehenden Randes (30) mit dem Rand des Schraubenkopfes (7) zentriert zum Halsabschnitt (6) gehalten ist.

14. Verfahren zum Herstellen einer Schraube für ein System nach einem der Ansprüche 10 bis 13, dadurch **gekennzeichnet,** daß ein Schraubenrohling (25) gewählt wird, dessen Außendurchmesser (26) so groß ist, daß beim anschließenden Aufwalzen des Gewindes (20) sich ein Gewindeaußendurchmesser (21) ergibt, der gleich oder nur geringfügig kleiner als der Durchmesser der Plattenbohrung (4) ist, und vor, während oder nach dem Aufwalzen des Gewindes (20) der Halsabschnitt (6) unterhalb des Schraubenkopfes (7) durch Drehen oder durch einen spanlosen Bearbeitungsvorgang auf einen Durchmesser (27) reduziert wird, der dem geforderten Spiel (z.B. 2,7 mm) zwischen Halsabschnitt (6) und Plattenbohrung (4) entspricht.

15. Verfahren nach Anspruch 14 zur Herstellung einer Schraube für ein System nach Anspruch 12 oder 13, dadurch **gekennzeichnet,** daß auf dem Schraubenrohling (25) durch Drehen oder durch einen spanlosen Bearbeitungsvorgang unterhalb des Schraubenkopfes (7) ein im Durchmesser reduzierten Halsabschnitt (6) geformt wird, auf diesen so vorbereiteten Schraubenrohling dann die Unterlegscheibe (8) mit einem über den Außendurchmesser des Schraubenrohlings passenden Loch (28) aufgeschoben wird und dann das Gewinde (20) aufgewalzt wird (Fig. 6).

16. Schraube zum Befestigen von Fassadenplatten (1) an einer Unterkonstruktion (2) mit einer unterhalb des Schraubenkopfes (2) auf dem Schraubenhals (6) unverlierbar angebrachten Unterlegscheibe (8), insbesondere für ein System nach einem der vorhergehenden Ansprüche 1 bis 15, dadurch **gekennzeichnet,** daß der im montierten Zustand auf der Oberfläche der Fassadenplatte (1) aufliegende äußere Rand (9) der Unterlegscheibe (8) abgerundet ist.

17. Schraube nach Anspruch 16, dadurch **gekennzeichnet,** daß die Unterlegscheibe (8) als topfförmiges Metallpreßteil ausgebildet ist.

18. Schraube nach Anspruch 17, dadurch **gekennzeichnet,** daß am oberen Rand der topfförmigen Unterlegscheibe (8) ein radial nach außen abstehender Randwulst (32) zur Aufnahme einer Abdeckkappe (15) aus Kunststoff vorgesehen ist und dieser obere Randwulst (32) auf seiner Oberseite (31) abgerundet und ohne scharfe Kanten ist.

19. Schraube nach Anspruch 18, dadurch **gekennzeichnet,** daß die Unterseite (34) des Randwulstes (32) abgeschrägt und/oder abgerundet ist.

20. Schraube nach Anspruch 18 oder 19, dadurch **gekennzeichnet,** daß die axialen Abmessungen der topfförmigen Unterlegscheibe (8) und des Randwulstes (32) sowie der mit Schnappwirkung auf den Randwulst (32) der Unterlegscheibe (8) aufsetzbaren Abdeckkappe (15) so gewählt sind, daß im aufgesetzten Zustand mindestens der äußere Rand (38) der Abdeckkappe (15) dicht auf der Oberfläche der Fassadenplatte (1) aufliegt.

Fig 1

Fassade

Holzlatte

Fig 3

Fig 2

Fassade

Holzlatte

0 271 648

Fig 4

Fassade

Holzlatte

Fig 5

Fig 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X<br><br>Y<br>A | DE-A-3 043 478  (KNOCHE)<br>* Seite 5, Zeile 29 - Seite 8, Zeile 20; Figuren 1,2 *<br><br> | 10,11<br><br><br>1,12,13<br>2-5,17 | E 04 F   13/08<br>F 16 B    5/02<br>F 16 B   43/00<br>F 16 B   37/14 |
| Y<br><br>A | US-A-3 828 493  (VEZMAR)<br>* Spalte 2, Zeile 41 - Spalte 5, Zeile 5, Figuren 1-8 *<br><br>--- | 1<br><br><br>6-8 | |
| Y<br><br>A | GB-A-2 142 108  (SFS STADLER AG).<br>* Seite 2, Zeile 83 - Seite 6, Zeile 50; Figuren 1-33 *<br><br>--- | 12,13<br><br><br>1,8,11,<br>17 | |
| A | GB-A-1 151 861  (FINDLAY)<br>* Seite 1, Zeile 65 - Seite 4, Zeile 6; Figuren 1,2 *<br>--- | 1,6,7 | |
| A | DE-U-8 506 297  (BWM DÜBEL- UND MONTAGETECHNIK GmbH)<br>* Seite 7, Zeile 17 - Seite 9, Zeile 17; Figuren 1-3 *<br>--- | 1-5 | RECHERCHIERTE SACHGEBIETE (Int. Cl.4)<br><br>E 04 F<br>F 16 B |
| A | FR-A-2 578 009  (GULISTAN)<br>* Seite 4, Zeile 31 - Seite 7, Zeile 11; Figuren 1-5 *<br>--- | 1-3,8,9 | |
| A | US-A-3 560 132  (GULISTAN)<br>* Spalte 3, Zeile 3 - Spalte 6, Zeile 19; Figuren 1-8 *<br>---                          -/- | 1,10-15 | |

Der vorliegende Recherchenbericht wurde für alle Patentansprüche erstellt

| Recherchenort | Abschlußdatum der Recherche | Prüfer |
|---|---|---|
| DEN HAAG | 19-02-1988 | AYITER J. |

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 408 751 (RIVEX) <br> * Seite 5, Zeile 17 - Seite 9, Zeile 2; Figuren 1-6 * <br> --- | 10,12, 14,15 | |
| A | FR-A- 467 794 (VOIGT UND HAEFFNER AG) <br> * Seite 1, Zeilen 1-23; Figuren 1,2 * <br> --- | 10,12, 15 | |
| A | FR-A-2 121 270 (BARBER & COLMAN LTD) <br> * Seite 2, Zeile 17 - Seite 3, Zeile 24; Figuren 1-3 * <br> --- | 1,8,11- 13,16, 18,19, 20 | |
| A | FR-A-2 086 693 (DERELY) <br> * Seite 2, Zeile 7 - Seite 4, Zeile 38; Figuren 1,2,6 * <br> ----- | 1,8,16- 20 | |

|  |  |
|---|---|
| | **RECHERCHIERTE SACHGEBIETE (Int. Cl.4)** |

Der vorliegende Recherchenbericht wurde für alle Patentansprüche erstellt

| Recherchenort | Abschlußdatum der Recherche | Prüfer |
|---|---|---|
| DEN HAAG | 19-02-1988 | AYITER J. |